# EUROPÄISCHE PATENTSCHRIFT

(11) **EP 2 106 513 B1**
(45) Veröffentlichungstag und Bekanntmachung des Hinweises auf die Patenterteilung: **20.04.2011**
(21) Anmeldenummer: 07866284.8
(22) Anmeldetag: 14.12.2007
(51) Int. Cl.: F16L 3/205, F16L 3/21

(54) **KONSTANTTRÄGER**
SUSPENSION WITH CONSTANT FORCE
SUSPENSION A EFFORT CONSTANT

(30) Priorität: 22.12.2006 DE 102006062195
(43) Veröffentlichungstag der Anmeldung: 07.10.2009
(73) Patentinhaber: Lisega Aktiengesellschaft, 27404 Zeven (DE)
(72) Erfinder: HARDTKE, Hans-Herlof, 27404 Zeven (DE); LANGE, Heinz-Wilhelm, 27404 Zeven (DE)
(74) Vertreter: Lippert, Stachow & Partner
(86) Internationale Anmeldenummer: PCT/EP2007/063923
(87) Internationale Veröffentlichungsnummer: WO 2008/077815

(56) Entgegenhaltungen:
- DE-A1- 10 104 661
- FR-A- 2 000 305
- US-A- 2 924 411

## Beschreibung

Die Erfindung betrifft einen Konstantträger für sich verschiebende Lasten, insbesondere für Rohrleitungen und dergleichen, mit einem Befestigungsteil, einem Lasttrageteil und einem zwischen Befestigungsteil und Lasttrageteil angeordneten Federsystem zur Erzeugung einer über einen Trageweg des Lasttrageteiles gegenüber dem Befestigungsteil konstant-bleibenden Tragekraft, wobei das Federsystem eine die Last aufnehmende Federung, eine Kompensationsvorrichtung zur Kompensation von sich ändernden Federkräften der Federung über den Trageweg und eine Vorspannvorrichtung zur Einstellung einer Vorspannkraft der Federung aufweist.

Ein Konstantträger kann beispielsweise ein Konstanthänger zum Anhängen einer Last oder eine Konstantstütze zum Abstützen einer Last sein. Ein Konstantträger der eingangs genannten Art werden beispielsweise in der DE 10 2005 045 736 und der PCT/DE2006/001678 oder, als Konstanthänger, in der DE 88 06 433 U1 und FR 22 86 330 A1 beschrieben. Hierbei sind jeweils Kompensationsvorrichtungen in Form von Zusatzfederungen und/oder Kurventeilen vorgesehen über die eine Abweichung einer Hauptfeder von einem theoretisch linearen Federkraft-Federweg-Verlauf durch beispielsweise Einleitung zusätzlicher Kräfte mittels der Zusatzfederung und/oder der Kurventeile kompensiert werden kann.

In der US 2 924 411 A wird beispielsweise ein Konstantträger mit einer Kompensationsvorrichtung, die eine als Kurvenscheibe ausgebildetes Kurventeil aufweist, beschrieben, über die umfänglich ein Lastseil mit angehängter Last über den Trageweg abläuft. Die Kurvenscheibe ist verdrehfest mit einer Kreisscheibe verbunden, an dem ein Seil zur Übertragung einer mittels der Federung erzeugten Zugkraft angreift. Es ist eine bestimmte Justierlage der Kurvenscheibe vorgesehen, für die die Kurvenscheibe ausgelegt ist. Bei einer Änderung einer Vorspannung der Federung erfolgt eine Abweichung der Kurvenscheibe aus der Justierlage. Mittels einer vorgesehenen Einstellvorrichtung, kann zum Erreichen der Justierlage die relative Läge von Kurvenscheibe und Kreisscheibe durch Drehung geändert werden, welches aufwendig und umständlich ist.Nicht berücksichtigt bei der Justierung ist jedoch, dass, wenn die eingestellte Vorspannung der Federung verändert wird, dies gleichzeitig Einfluss auf das gesamte Federverhalten der Federung hat. Denn hierbei treten trotz der Einstellung der Kompensationsvorrichtung weitere Abweichungen von dem gewünscht konstanten Tragekraft-Trageweg-Verlaufes auf, da die Abweichungen vom theoretisch linearen Federkraft-Federweg-Verlauf mit der Änderung der Vorspannung in Bereiche höherer oder niedrigerer Kräfte anders ausfallen als in dem Bereich der ursprünglich voreingestellten Vorspannkraft, auf den aber die Umrissform der Kurvenscheibe notwendig abgestimmt ist.

In der DE 101 04 661 A1 wird ein als Konstanthänger ausgebildeter Konstanträger beschrieben, der eine Hauptfederung mit einer Schraubendruckfeder und eine Zusatzfederung mit einer Blattfeder zur Kompensation von Abweichungen der Federkraft der Hauptfederung vom theoretisch linearen Federkraft-Federweg-Verlauf aufweist, wobei die Vorspannungen von Hauptfederung und Zusatzfederung getrennt einstellbar sind.

Die FR 2 000 305 A offenbart einen als Hebelarmträger ausgebildeten Konstanthänger, der eine Federeinrichtung mit einer Schraubendruckfeder und eine Hebelanordnung mit einem Krafthebelarm und einem Lasthebelarm aufweist, wobei letztere dazu beiträgt, ein auf eine angehängte Last ausgeübtes Drehmoment zu minimieren.

Wird also eine eingestellte Vorspannung der Federung verändert, so hat dies gleichzeitig Einfluss auf das gesamte Federverhalten der Federung. Dies führt trotz der. Kompensationsvorrichtung zu Abweichungen von dem gewünscht konstanten Tragekraft-Trageweg-Verlaufes, die nicht mehr den Anforderungen von wenigen Prozent Tragekraftabweichung im Tragekraft-Trageweg-Verlauf liegen können. Dies kann wiederum beispielsweise die Maßnahme erfordern, dass ein Kurventeil mit anderen Geometrien und/oder eine geänderte Zusatzfederung in den Konstantträger eingebaut werden, welches aufwendig ist, einen Einsatz eines geschulten Mechanikers bedarf und in der Regel kaum vor Ort durchgeführt werden kann.

Der Erfindung liegt die Aufgabe zugrunde, einen Konstantträger der eingangs genannten Art mit einer Möglichkeit zur Korrektur der Kompensationsvorrichtung bereitzustellen, mittels welches, bei einer Änderung der Vorspannung in Bereiche höherer oder niedrigerer Kräfte, die durch diese geänderte Vorspannung über den Trageweg auftretenden Abweichungen vom theoretisch linearen Federkraft-Federweg-Verlauf ebenso wie die Abweichungen vom theoretisch linearen Federkraft-Federweg-Verlauf kompensierbar sind, die im Bereich der ursprünglich voreingestellten Vorspannkraft über den Trageweg auftreten, ohne dass ein Austausch von Bauteilen notwendig ist. Ferner sollen diese Korrekturen einfach und unaufwendig durchführbar sein.

Die gestellte Aufgabe wird erfindungsgemäß durch die Merkmale des kennzeichnenden Teiles des Anspruches 1 gelöst. Durch die Korrekturvorrichtung können somit von Abweichungen des gewünscht konstanten Tragekraft-Trageweg-Verlauf infolge einer geänderten Vorspannfederkraft korrigiert werden, ohne dass ein Austausch von beispielsweise eines Bauteiles der Kompensationsvorrichtung notwendig wird, so dass die Vorspannung eines für einen Einsatz vorgesehenen Konstantträgers vor Ort auf Lastbedingungen eingestellt werden kann, wie sie sich, abweichend von erwarteten und/oder errechneten, tatsächlich ergeben. Vorzugsweise ist die Korrekturvorrichtung in dem Konstantträger integriert. Die Korrekturvorrichtung kann innerhalb des Gehäuses angeordnet sein. Hierdurch kann eine angestrebte kompakte Bauweise beibehalten werden. Die Korrekturvorrichtung kann so ausgelegt sein, dass sie unmittelbar auf die Federung wirkt. Hierzu kann beispielsweise ein Zuschalten von Korrekturfederelementen vorgesehen sein, welches jedoch die Korrekturvorrichtung aufwendig werden ließe. Daher ist vorzugsweise vorgesehen, dass die Korrekturvorrichtung in Form einer Änderung der Federanordnung unmittelbar auf die Federung wirkt oder auswirkt. Diese Änderung bezieht sich bevorzugt auf eine räumliche Ausrichtung einer oder mehrer Federn der Federung, wodurch der Verlauf der übertragenden Federkräfte bzw. der Tragekraft über den Tragewegverlauf entsprechend der geänderten Vorspannung korrigiert werden kann.

Vorteilhafterweise kann vorgesehen sein, dass die Korrekturvorrichtung mit der Vorspannvorrichtung gekoppelt, vorzugsweise unmittelbar gekoppelt ist. Dies heißt, dass eine Einstellung der Vorspannung und eine Korrektur über die Korrekturvorrichtung in einem Arbeitsgang erfolgen können. Bevorzugt erfolgt die Korrektur automatisch mit einer Änderung der Vorspannkraft vorzugsweise über die Korrekturvorrichtung.

In einer Weiterbildung des Konstantträgers kann die Kompensationsvorrichtung ein mit dem Lasttrageteil gekoppeltes Kurventeil aufweisen. Es kann die Federung mindestens eine Feder, insbesondere eine Druckfeder, umfassen, die sich mit einer Kraftseite in einem Kraftpunkt an dem Befestigungsteil abstützt und zur Kraftübertragung von der Federung auf das Lasttrageteil mit einer Lastseite in einem Lastpunkt an dem Kurventeil angreift. Erfindungsgemäß können der Lastpunkt und/oder der Kraftpünkt zur Korrektur von Abweichungen der Tragekraft über den Trageweg infolge einer geänderten Vorspannfederkraft relativ zum Kurventeil und über einen Einstellweg mit einer Wegkomponenten senkrecht zur Federachse der jeweiligen Feder und in einer Ebene mit oder parallel zu der Tragekraft lageveränderbar angeordnet sein. Hierbei bezieht sich die Lageveränderlichkeit vorzugsweise auf das Kurventeil und/oder auf das Befestigungsteil. Zweckmäßigerweise können Lastpunkt und/oder der Kraftpunkt in einer bestimmten Korrekturposition fixierbar angeordnet sein. Dies kann beispielsweise über ein Einklemmen oder Befestigen des jeweiligen Punktes oder über ein Abstützen des jeweiligen Punktes erfolgen. Die Korrektur kann an einer oder mehreren Federn der Zusatzfederung und/oder der Hauptfederung erfolgen.

Die Feder ist vorzugsweise als Druckfeder ausgebildet. Eine Voreinstellung der Vorspannung kann, wie weiter unten sowie in der DE 10 2005 045 736 und der PCT/DE2006/001678 detaillierter beschrieben, über ein axiales Zusammendrücken oder Entspannen der Feder von einem seiner Enden her erfolgen. Von daher wird der Offenbarungsgehalt der Druckschriften DE 10 2005 045 736 und.der PCT/DE2006/001678 hinsichtlich der Voreinstellung der Vorspannung hier in den Offenbarungsgehalt dieser vorliegenden Anmeldung mit aufgenommen. Wie eingangs erwähnt, verändert sich mit einer Verlängerung oder Verkürzung der Federlänge zugleich das Federverhalten über den Tragekraft-Trageweg-Verlauf. Erfindungsgemäß ist zur Korrektur zusätzlich eine Verschiebung des Lastpunktes senkrecht zur Federachse vorgesehen, wodurch die Kräftegeometrien, die in der Tragekraft resultieren, so geändert werden können, dass trotz der geänderten Vorspannkraft eine Konstanz der Tragekraft über den Trageweg innerhalb eines geringen Toleranzbereiches von wenigen Prozent gewährleistet sein kann.

Wie ebenfalls in der DE 10 2005 045 736 und der PCT/DE2006/001678 oder in der EP 0 306 786 A1 beschrieben, kann der Lastpunkt beispielsweise mittels einer Rolllagerung oder Gleitlagerung über eine Kurvenseitenfläche des Kurventeiles über den Trageweg relativ zum Kurventeil beweglich und/oder durch Anlagerung schwenkbeweglich zum Kurventeil angeordnet sein. Durch die erfindungsgemäße Korrekturvorrichtung kann eine Lageverschiebung des Lastpunktes vorgenommen werden, die seine Bewegung relativ zum Kurventeil in jedem Punkte überlagert. Somit kann der Lastpunkt gegenüber seiner ursprünglichen Lageeinstellung voreilend oder nacheilend eingestellt sein.

Vorzugsweise weist die Korrekturvorrichtung eine Führung für den Lastpunkt und/oder den Kraftpunkt einer oder mehrerer Federn auf. Hierbei kann vorgesehen sein, dass der Lastpunkt und/oder der Kraftpunkt zu seiner Einstellung in der Führung auf einem Führungsweg mit zumindest einer Wegkomponente senkrecht zu der Längsachse der Feder und in einer Ebene mit der Tragekraft verschiebbar sind. Vorzugsweise können der Lastpunkt und/oder den Kraftpunkt in und entgegen Tragekraftrichtung verschiebbar angeordnet sein. Hierdurch ist bereits eine Änderung der Vorspannung der betreffenden Feder möglich. Zusätzlich kann eine Verschiebung mit einer Wegkomponente in Längsachse der Feder vorgesehen sein, wodurch eine weitere Änderung der Vorspannung der Feder ermöglicht wird. Zweckmäßigerweise können Lastpunkt und/oder Kraftpunkt in einer gewünschten Korrekturposition in der Führung bezüglich des Kurventeiles kraft- und/oder formschlüssig fixierbar sein. Somit kann die Korrekturvorrichtung die Abweichung der Tragekraft über den Trageweg bei einer Lastverstellung dadurch korrigieren, dass die Neigung der Feder und damit eine von der Feder auf das Kurventeil oder auf die Kompensationsvorrichtung übertragene Kraft in ihrer Größe und/oder Richtung geändert werden.

Anstatt einer einzelnen Feder können auch mehrere Federn vorgesehen sein, die auf einen gemeinsamen Lastpunkt und somit bezüglich des Lastpunktes als eine Gesamtfeder wirken. Somit können sich die einzelnen Federkräfte bezüglich des Lastpunktes zu einer Gesamtfederkraft vektoriell addieren, so dass bei gewünscht größeren Gesamtfederkräften Abmessungen des Konstantträgers gering gehalten werden können. Vorzugsweise sind hierbei die einzelnen Federachsen der Federn parallel zueinander angeordnet. Die Federn können auch koaxial zueinander angeordnet sein. Es können einzelne oder alle parallel zueinander angeordnete Federn zusätzlich jeweils eine oder mehrere koaxial angeordnete Federn aufweisen. Hierzu können beispielsweise zwei koaxial zueinander angeordnete und/oder zwei nebeneinander angeordnete Federn vorgesehen sein.

Vorzugsweise kann die Federung zwei Federn, insbesondere zwei Druckfedern, aufweisen. Die Druckfedern können symmetrisch zur Tragekraft einander gegenüberliegend angeordnet sein. Hierbei können die Federachsen der Federn oder Druckfedern in einer Grundposition zueinander geneigt positioniert sein und einen Winkel von kleiner oder größer 180° einschließen. Die Federn können in der Grundposition mit einer Wegkomponente entgegen der oder in Tragekraft aufeinander zulaufend angeordnet sein. Vorzugsweise sind die Federn in der Grundposition auf einer gemeinsamen Federachse angeordnet. Hierzu können die Druckfedern jeweils mit ihrer Lastseite in einem ihnen zugeordneten Lastpunkt an dem Kurventeil oder an einem ihnen jeweils zugeordneten Kurventeil angreifen. Dadurch wird, wie in der DE 10 2005 045 736 und der PCT/DE2006/001678 näher beschrieben und von hier aus ausdrücklich verwiesen, ein symmetrisches Kräftesystem vorgeschlagen, welches ermöglicht, dass verhältnismäßig große Kräfte auf das Kurventeil übertragen werden können, von denen ein bestimmter Teil in Tragekraftrichtung wirkt. Infolge der symmetrischen Federanordnung kann auch der gesamte Aufbau des Konstanthängers spiegelsymmetrisch mit einer Spiegelsymmetrieebene senkrecht zu einer Ebene sein, die sich in Tragekraftrichtung erstreckt und parallel zu den Federachsen verläuft läuft. Die Grundposition kann somit der Position entsprechen, in der das Kurventeil werkseitig für eine bestimmte Vorspannung "angepasst" sein kann. Hierbei kann vorgesehen sein, dass die Korrekturvorrichtung erst mit einer hiervon geänderten Vorspannung korrigierend eingreift, in der sich der Lastpunkt, wie weiter unten detaillierter beschrieben, bezüglich des Kurventeiles verschiebt.

Es kann, wie oben erwähnt, zur Federung eine Zusatzfederung zur Kompensation des Federfehlers bei sich ändernder Federbelastung vorgesehen sein. Hierbei können Zusatzfederung und Federung, allgemein im Stand der Technik als Hauptfederung bezeichnet, horizontal und parallel zueinander angeordnet sein. Es kann für jede Federung ein Paar Druckfedern vorgesehen sein.

Bevorzugt sind die beiden Druckfedern eines Druckfederpaares in einer Grundposition auf einer Federachse angeordnet, wobei die Kompensationsvorrichtung, d.h. zugeordnete Kurventeile oder Kurvenhebel, zwischen den Druckfedern positioniert sind. Die Druckfedern können somit in ihrer Grundposition gegeneinander auf das Kurventeil oder die Kurventeile wirken. Das Kurventeil weist vorzugsweise für jede Druckfeder eine zugeordnete Kurvenseitenfläche auf, wobei diese auf einem gemeinsamen Kurventeil oder auf jeweils einem zugeordneten Kurventeil, insbesondere einem Kurvenhebel, angeordnet sein können. Insbesondere in Hinsicht auf den Kurvenhebel beschreibt die PCT/DE2006/001678 die Kräftesymmetrien detaillierter, wobei deren Offenbarungsgehalt insbesondere in Hinsicht auf die Federanordnung und der Kraftübertragung von dem Kurventeil auf das Lasttrageteil, die Anordnung und Ausbildung der als Kurvenhebel ausgebildeten Kurventeile ausdrücklich mit in den Offenbarungsgehalt dieser Anmeldung aufgenommen wird.

In der DE 10 2005 045 736 A1 wird eine andere Federanordnung beschrieben, in der eine parallel zu einer Hauptfederung eine Zusatzfederung vorgesehen ist, die über Kurventeile auf das Lasttrageteil wirkt. Hier können der Lastpunkt und/oder der Kraftpunkt einer oder mehrer Zusatzfedern und/oder Hauptfedern in der Führung verschieblich angeordnet sein.

In einer bevorzugten Ausbildung kann das Kurventeil mindestens einen als Kurvenhebel ausgebildeten und an dem Befestigungsteil in einem Schwenkgelenk gelagerten Hebel mit zwei einander gegenüberliegenden Seitenflächen in seiner Längserstreckung, einer erste Seitenfläche und eine zweite Seitenfläche, aufweisen. Vorzugsweise ist die Feder mit ihrer Lastseite in einem Bereich der ihr zugewandten ersten Seitenfläche oder an der ihr zugewandten ersten Seitenfläche bevorzugt verschwenkbar angelagert ist oder stützt sich bevorzugt an derselben ab. Die zweite Seitenfläche kann als Kurvenseitenfläche ausgebildet sein, an der das Lasttrageteil verschieblich oder abrollbar anliegt. Somit kann über einen Abstand zwischen Schwenkgelenk bzw. Schwenkachse des Kurvenhebels am Befestigungsteil und der vorzugsweise verschwenkbaren Anlagerung der Feder an der ersten Seitenfläche ein Kraftarm ausgebildet werden. Entsprechend kann ein Lastarm über einen Abstand zwischen Schwenkgelenk bzw. Schwenkachse des Kurvenhebels und einem Lastpunkt, oder - Bereich, in dem das Lasttrageteil verschieblich oder abrollbar an dem Kurvenhebel anliegt, ausgebildet werden. Über eine Änderung des Lastarmes und/oder des Kraftarmes, vorteilhafterweise in der Grundposition, in ihrer Richtung und/oder ihrer Länge können eine Korrektur und zusätzlich gleichzeitig eine Änderung der Vorspannung der betreffenden Feder erfolgen. Mit einer Lageveränderung des Lastpunktes in der Führung kann der Kraftarm in seiner Orientierung zum Lasttrageteil und/oder in seiner Armlänge veränderbar sein.

Das Lasttrageteil kann eine Lastrolle mit einer Drehachse senkrecht zur Federachse und senkrecht zur Tragekraftrichtung aufweisen. Vorzugsweise ist vorgesehen, dass die Kurvenseitefläche in einer Ebene senkrecht zur Drehachse abrollbar an der Lastrolle anliegt. Somit kann über das Abrollen eine Änderung des Lastarmes erfolgen. Über die Profilierung der Kurvenseitenfläche kann eine Kompensation des Federfehlers über den Federweg erfolgen. Bei mehreren, jeweils einzeln auf das Kurventeil wirkenden Federn kann jeder Feder ein Kurvenhebel mit einer Kurvenseitenfläche zugeordnet sein. Hierbei kann das Lastrageteil jeweils über eine Lasttragerolle an der Kurvenseitenfläche des ihm zugeordneten Kurvenhebels angreifen. Die Lasttragerollen können wiederum auf einer gemeinsamen, als Lastrollenachse ausgebildeten und an dem Befestigungsteil gelagerten Drehachse angeordnet sein. Durch auf die Lasttragerolle aufgeschobene Hülsen können die Lastrollen voneinander und von dem Gehäuse beabstandet sein. Das Lastrageteil kann ferner Lasttragelaschen mit einem den Trageweg begrenzenden Führungsschlitz aufweisen, den die Lasttrageachse durchgreift. In Bezug zur Ausbildung des Kurventeiles bzw. der Kurvenhebel, des Lasttrageteiles und der Anordnung der Lastrollen wird wiederum auf die PCT/DE2006/001678 verwiesen, wobei deren Offenbarungsgehalt hier mit aufgenommen wird.

Zudem können die Kurvenseitenfläche an dem Lasttrageteil mit einem sich mit dem Verfahren des Lasttrageteiles über den Trageweg verschiebenden Punkt oder Bereich anliegen, der mit einem sich über den Trageweg ändernden Betrag in Richtung der Tragekraft weist. Hierdurch kann eine Ausrichtung bzw. Umlenkung der eingeleiteten Federkraft so erfolgen, dass stets eine Kraftkomponente in Richtung der Tragekraft auf das Lasttrageteil übertragen werden kann und somit stets eine notwendige Tragekraft ausgebildet ist.

In einer bevorzugten Weiterbildung des Konstantträgers kann das Kurventeil flächig mit einer größeren Seitenfläche ausgebildet sein. Ferner kann das Kurventeil in einem Schwenklager um eine Schwenkachse senkrecht zu seiner größeren Seitenfläche sowie senkrecht zur Längsachse der Feder und zum Trageweg an dem Befestigungsteil des Konstantträgers angelagert sein. Bevorzugt ist die Führung beabstandet zum Schwenklager in dem Kurventeil integriert. Hiermit wird eine einfache Konstruktion vorgeschlagen, da mit der Integration der Führung in das Kurventeil keine neuen Bauteile zur Halterung der Führung erforderlich sind.

Vorzugsweise weist die Führung ein Langloch oder einen Schlitz zur Aufnahme und Führung des Lastpunktes auf. Diese Ausbildungsform kann besonders einfach in ein flächiges Kurventeil integriert werden. Hierbei kann das Langloch ähnlich wie die Kurvenseitenflächen einen geschwungenen Verlauf aufweisen, der sich unter anderem aus einer Änderung der Federkräfte über den Tragekraft-Trageweg-Verlauf und einer durch eine veränderte Vorspannung geänderte oder versetzte Kennlinie der Federung ergeben kann.

Vorzugsweise ist das Langloch in seiner Längserstreckung linear ausgebildet, so dass der Lastpunkt linear in der Führung geführt werden kann. Hierzu können das Langloch in seiner Längserstreckung und der Kraftarm einen Korrekturwinkel einschließen, der vorzugsweise größer 0°ist. Die Ausrichtung des Langloches kann über eine entsprechende Vorrichtung einstellbar sein. Hierzu kann der Abschnitt des Kurventeiles mit dem Langloch zum Beispiel um eine Achse senkrecht zur Längserstreckung des Langloches drehbar und in bestimmter Drehposition beispielsweise mittels einer vorgesehenen Klemmvorrichtung fixierbar in dem Kurventeil angeordnet sein. Bevorzugt ist das Langloch jedoch fest in das Kurventeil integriert.

Der in der Praxis ideale oder optimale Korrekturwinkel hängt unter anderem von den Geometrien der Kompensationsvorrichtung und den Kennlinien der Federung sowie von der voreingestellten Vorspannung der Federung in der Grundposition ab.

Zum leichteren Verschieben des Lastpunktes in der Führung kann die Feder an ihrer Kraftseite verschwenkbar an dem Befestigungsteil angeordnet sein. Dadurch ist eine Verschwenkung der Feder mit Verschiebung des Lastpunktes möglich. Diese Verschwenkung kann jedoch relativ gering sein. Vorzugsweise sind als Federn Schraubenfedern und, insbesondere im Falle eines vorgesehenen Einsatzes des Konstantträgers als Konstanthänger, als Schraubendruckfedern vorgesehen. Zur Verminderung des Herstellungsaufwandes kann alternativ vorgesehen sein, dass die Federn an ihrer Kraftseite nicht über ein Schwenkgelenk an dem Befestigungsteil angeordnet sind und dass ein Ausgleich bei einer Verschiebung des Lastpunktes in der Führung relativ zum Befestigungsteil durch eine elastische Verformung und/oder Schrägstellung der Feder erfolgt.

Zweckmäßigerweise kann der Lastpunkt der Feder in der Grundposition bezüglich der Längserstreckung des Langloches mittig in dem Langloch angeordnet sein. Dadurch sind innerhalb eines bestimmten, unter anderem von der Länge des Langloches abhängigen Intervalls eine Verminderung und eine Erhöhung der voreingestellten Vorspannung möglich.

Wie erwähnt, kann der Lastpunkt in einer bestimmten Korrekturposition in der Führung bzw. in dem Langloch fixierbar sein. Vorzugsweise oder zusätzlich kann vorgesehen sein, dass sich der Lastpunkt in der Führung mittels einer Haltevorrichtung gegen das Kurventeil abstützt. Es kann beispielsweise ein mechanisch oder motorisch verstellbarer Linearantrieb eingesetzt sein, der den Lastpunkt in der Führung verschieben und dessen Verschiebung in einer bestimmten Position blockieren kann. Vorzugsweise können für jede Feder zwei Kurvenhebel mit Langlöchern zur Führung der Lastpunkte der Federn vorgesehen sein. Die beiden Kurvenhebel können parallel beabstandet zueinander und zur Tragekraft fluchtend sowie senkrecht oder etwa senkrecht zur Federachse und auf einem gemeinsamen Schwenkbolzen verschwenkbar am Befestigungsteil angeordnet sein. Hierzu können, wie in der PCT/DE2006/001678 beschrieben und darauf verwiesen, auf dem Schwenkbolzen Beabstandungselemente, vorzugsweise in Form von auf dem Schwenkbolzen aufgezogene Hülsen, vorgesehen sein, die zwischen den Schwenkhebel und diese beabstandend angeordnet sein können.

Zweckmäßigerweise kann sich die jeweilige Feder mit ihrem Lastpunkt mittig auf einem ersten Querelement in Form eines Querblockes, einer Querstrebe oder bevorzugt in Form eines Querbolzens abstützen, der jeweils mit einem Führungsende in einer der Führungen in den Kurvenhebeln verschiebbar und vorzugsweise verdrehsicher gelagert ist. Hierzu kann das Führungsende von zwei gegenüberliegenden Seiten her und jeweils unter Ausbildung einer Schulter und zweier parallelen Führungsseitenflächen seitlich abgeflacht sein. Somit kann das Führungsende verdrehsicher und verschieblich an den Innenseitenflächen der ihr zugeordneten Führung anliegen. Bevorzugt durchragt das Führungsende das Langloch und überragt die Seitenfläche, in der das Langloch eingelassen ist, um einen geringen Betrag. Zur Begrenzung des Führungsweges können bevorzugt über die Längsachse der Langlöcher lageveränderbare Anschläge vorgesehen sein. Vorzugsweise schlagen die Führungsenden endseitig der Langlöcher an. Vorzugsweise ist stirnseitig an zumindest einem Führungsende des Querbolzens eine Markierung vorgesehen, die vorzugsweise eine geometrische Mitte der Stirnseite bezüglich einer Längsachse des Langloches anzeigt. Die Markierung kann zum Beispiel farblich von ihrer baulichen Umgebung abgesetzt sein. Vorzugsweise kann die Markierung eine Kerbe oder Nut aufweisen, wobei Kerbe oder Nut zweckmäßigerweise senkrecht zu den Führungsseitenflächen verlaufen. Die Kerbe oder Nut kann einen runden oder geschwungenen Querschnitt aufweisen. Vorzugsweise ist der Querschnitt so ausgelegt, dass er eine mittige Formlängslinie ausbildet. Es wird ein V-förmiger Querschnitt bevorzugt. Seitlich am Langloch angrenzend, kann eine Skala zur Anzeige des Führungsweges des Führungsendes in dem Lochloch vorgesehen sein. Bevorzugt ist die Skala als Lastskala ausgebildet und in einer Krafteinheit, vorzugsweise in Kilo-Newton (kN) und/oder in pounds (lps), skaliert. Es kann zur Durchsicht auf das Langloch und/oder auf die Skala jeweils in Höhe zumindest eines Langloches ein Gehäusefenster in einem Gehäuse des Konstantträgers vorgesehen sein.

Es kann zum Abstützen des Querbolzens ein zwischen den Kurvenhebel angeordnetes zweites Querelement in Form eines Querbolzens, einer Querstrebe oder dergleichen, bevorzugt in der eines Querblocks, vorgesehen sein. Der Querblock kann zweckmäßigerweise parallel und auf der Längsachse des Langloches beabstandet sowie jeweils mit einem Ende mit den Schwenkhebeln verbunden angeordnet sein. Der Querbolzen kann über eine mittig im Querblock drehbar gelagerte Spindel mit dem Querblock verbunden sein, indem diese durch eine erste Durchgangsöffnung mit Innengewinde geführt ist, mit dem die Spindel in Gewindeeingriff steht. Mit Drehung der Spindel kann somit der mit seinen Führungsenden verdrehfest in den Langlöchern gelagerte Querbolzen in Längserstreckung der Langlöcher verschoben werden. Vorzugsweise weist der Querbolzen bis auf seine abgeflachten Führungsenden einen kreisrunden Querschnitt auf.

Der Querblock kann zweckmäßigerweise einen im wesentlichen rechtwinkligen Querschnitt aufweisen, wobei die Spindel den Querblock vorzugsweise von einer dem Querbolzen zugewandten Seitenfläche her durch eine zweite Durchgangsöffnung durchragt und in dieser frei drehbar, das heißt ohne Gewindeeingriff, gelagert ist. Über ein Blockierelement, vorzugsweise über eine gekonterte und an der Seitenfläche anliegenden Schraubenmutter, kann sich die Spindel und damit der Querbolzen mit dem Lastende der Feder an dem Querblock und damit an den Kurventeilen bzw. Kurvenhebeln abstützen. Der Querblock ist vorzugsweise über eine Steckverbindung mit den Kurventeilen vorzugsweise lose bleibend verbunden. Somit ist die Haltevorrichtung leicht montierbar und demontierbar.

Der Querblock kann zweckmäßigerweise in Einbaulage unterseitig des Querbolzens angeordnet sein, die Spindel mit einem Einstellende den Querblock durchragen und an dem Einstellende ein Schraubenkopf mit vorzugsweise einer üblichen Ausbildung zum Verdrehen der Spindel vorgesehen sein. Somit kann die Korrekturvorrichtung bzw. die Spindel unaufwendig bei einem als Konstanthänger ausgebildeten Konstantträger in Einbaulage von unten her mittels eines üblichen Werkzeuges, wie Steckschlüssel oder Inbusschlüssel, betätigt werden.

Die Vorspannvorrichtung kann eine Einstellvorrichtung zur Voreinstellung der Vorspannkraft aufweisen. Diese kann wie die oder ähnlich der in der DE 10 2005 045 736 und der PCT/DE2006/001678 beschriebenen ausgeführt sein, auf die hier ausdrücklich verwiesen wird. Dank der erfindungsgemäßen Korrekturvorrichtung kann die Voreinstellung der Vorspannkraft, abgestimmt auf die vorgesehene zweite Kurvenseitenfläche, beispielsweise werkseitig erfolgen und so versiegelt oder blockiert werden, dass keine unbeabsichtigte Veränderung der Voreinstellung auftreten kann.

Hierzu kann, wie in der DE 10 2005 045 736 und der PCT/DE2006/001678 detaillierter beschrieben, die Feder befestigungsseitig in einem Befestigungswiderlager und/oder lastseitig ein Lastwiderlager angeordnet sein, wobei das Befestigungswiderlager und/oder das Lastwiderlager in Richtung der Federachse verschiebbar und feststellbar sein können. Die Widerlager können zum sicheren Abstützen der Feder jeweils eine Stützscheibe aufweisen, auf die sich die jeweilige Feder stirnseitig abstützt und die über eine Schraubvorrichtung in Richtung der Federachse verschiebbar einstellbar ist. Insbesondere kann das Lastwiderlager eine als Spannwand ausgebildete Seitenwand des Gehäuses aufweisen, auf die sich die Feder befestigungsseitig abstützt und die zur Voreinstellung der Vorspannung über eine Schraubvorrichtung in Richtung der Federachse verschiebbar einstellbar und fixierbar ist.

Die vorliegende Erfindung wird im Folgenden anhand eines in einer Zeichnung dargestellten Ausführungsbeispieles näher erläutert. In der Zeichnung zeigen:
Fig. 1 eine perspektivische Darstellung eines Konstantträgers, wobei Teile eines Gehäuses weggelassen sind,
Fig. 2 eine perspektivische Darstellung des Konstantträgers gemäß Figur 1, wobei ein vorderer Kurvenhebel fortgelassen ist,
Fig. 3a eine Seitenansicht des Konstantträgers in einer Grundposition mit einer mittleren Tragekraft, wobei eine hier rechte Feder eines Federsystemes fortgelassen ist,
Fig. 3b eine Seitenansicht des Konstantträgers gemäß Figur 3a, jedoch mit einer maximalen Tragekraft,
Fig. 3c eine Seitenansicht des Konstantträgers gemäß Figur 3a, jedoch mit einer minimalen Tragekraft,
Fig. 4 eine Seitenansicht des Federsystemes des Konstantträgers,
Fig. 5 eine perspektivische Ansicht eines Kurventeilpaares des Federsystemes
Fig. 6 eine Unteransicht des Kurventeilpaares gemäß Figur 5
Fig. 7a eine Seitenansicht des Konstantträgers wie in Figur 3a in einer oberen Verschiebeposition,
Fig. 7b eine Seitenansicht des Konstantträgers gemäß Fig. 7a, jedoch in einer mittleren Verschiebeposition,
Fig. 7c eine Seitenansicht des Konstantträgers gemäß Fig. 7a, jedoch in einer unteren Verschiebeposition und
Fig. 8 eine perspektivische Seitenansicht des Konstantträgers mit vorderer Gehäuseseitenwand und eingesetzter Transportsicherung

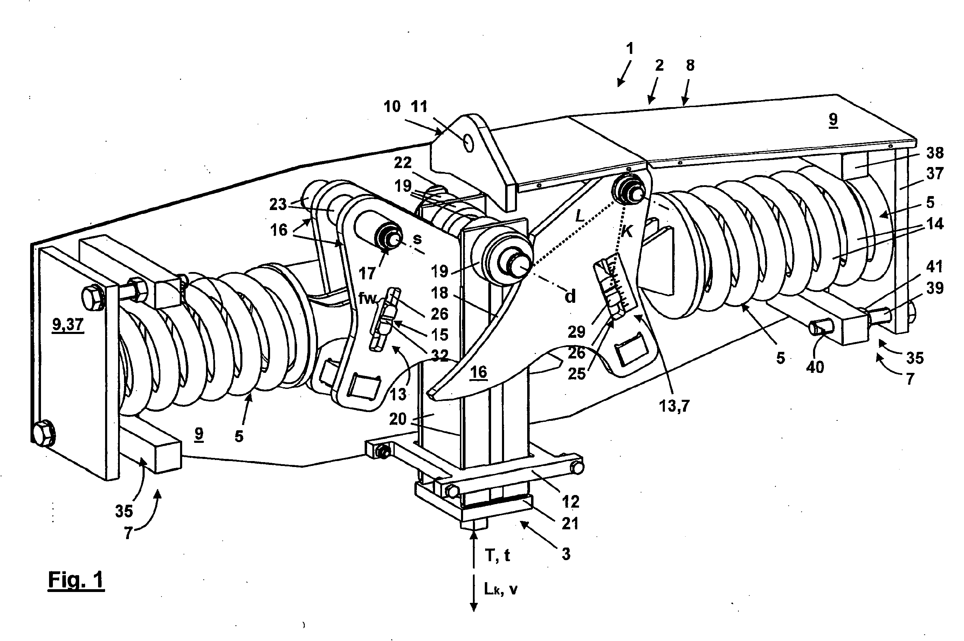

In den Figuren 1-8 werden ein Konstantträger 1 und Teile des Konstantträgers 1 in verschiedenen Ansichten gezeigt, wobei der Konstantträger 1 in dem hier gezeigten Beispiel für eine hier nicht gezeigte, anzuhängende Last ausgelegt ist und somit als Konstanthänger fungiert.

Der Konstantträger 1 für die sich verschiebende Last, insbesondere für eine hier nicht dargestellte Rohrleitung und dergleichen, weist ein Befestigungsteil 2, ein Lasttrageteil 3 und ein zwischen Befestigungsteil 2 und Lasttrageteil 3 angeordnetes Federsystem 4 zur Erzeugung einer über einen Trageweg t_{w} des Lasttrageteils 3 gegenüber dem Befestigungsteil 2 konstant bleibenden Tragekraft T auf. Das Federsystem 4 umfasst eine die Last aufnehmende Federung 5, eine Kompensationsvorrichtung 6 zur Kompensation von sich ändernder Federkräfte der Federung 5 über den Trageweg t_{w} und eine Vorspannvorrichtung 7 zur Einstellung einer Vorspannfederkraft V der Federung 5. Durch die Ausbildung des Konstantträgers 1 als Konstanthänger ist das Befestigungsteil 2 in Einbaulage oben und das Lasttrageteil 3 in Einbaulage sich nach unten erstreckend ausgebildet. Sämtliche in den Figuren eingezeichnete Kraftvektoren sind qualitativ zu sehen und sollen keine genauen Betragsangaben wiedergeben.

Das Befestigungsteil 2 weist ein Gehäuse 8 mit plattenartigen Seitenwänden 9 auf, von denen die jeweils vordere Seitenwand in den Figuren 1, 2, 3a-c und 7a-c sowie die deckelartigen oberen linken Seitenwände in den Figuren 1, 2, 7a und 7b fortgelassen sind. Beide größeren Seitenwände, d. h. die vordere Seitenwand und die hintere Seitenwand 9, sind mit einer oberen Anschlusslasche 10 verbunden, die eine Befestigungsöffnung 8 zur Verbindung und Aufhängung an eine hier nicht dargestellte Basis aufweist. Das Gehäuse 8 umschließt seitlich nach oben das Federsystem 4 und das Lasttrageteil 3, wobei das Lasttrageteil 3 über den Trageweg t_{w} in einer Verschieberichtung v in Richtung einer Lastkraft L nach unten durch eine Blende 12 aus dem Gehäuse 8 verschiebbar und wieder entgegen der Verschieberichtung v in Richtung der Tragekraft T zurückverschiebbar ist.

Erfindungsgemäß ist eine Korrekturvorrichtung 13 zur Korrektur von Abweichungen der Tragekraft T über den Trageweg t_{w} infolge einer geänderten Vorspannfederkraft V vorgesehen. Hierbei ist die Korrekturvorrichtung 13, wie weiter unten näher erläutert, gleichzeitig mit einer Vorspannfunktion für die Federung 5 versehen. Die Korrekturvorrichtung 13 ist mit einem Teil der Vorspannvorrichtung 7 gekoppelt, um gleichzeitig in einem Arbeitsgang und automatisch mit einer Änderung einer zum Beispiel werkseitig vorgenommen Voreinstellung der Vorspannfederkraft die Korrektur über die Korrekturvorrichtung 13 vornehmen zu können.

Die Federung 5 umfasst zwei in Einbaulage horizontal angeordnete als Druckfedern ausgebildete Federn 14, die sich jeweils mit einer Kraftseite an dem Gehäuse 8 und mit einer Lastseite in einem Lastpunkt 15 an der Kompensationsvorrichtung 6 abstützen. Die Kompensationsvorrichtung 6 weist für jede Feder 14 zwei Kurvenhebel 16, die parallel beabstandet zueinander und senkrecht zur Tragekraft T fluchtend sowie auf einem gemeinsamen Schwenkbolzen 17 um eine Schwenkachse s frei verschwenkbar an dem Gehäuse 8 angeordnet sind. Die Schwenkachse s steht senkrecht zur vorderen und hinteren Seitenwand 9 des Gehäuses 8. Auf dem Schwenkbolzen 17 aufgezogene Hülsen 22 beabstanden die Kurvenhebel 16 voneinander und von den Seitenwänden 9.

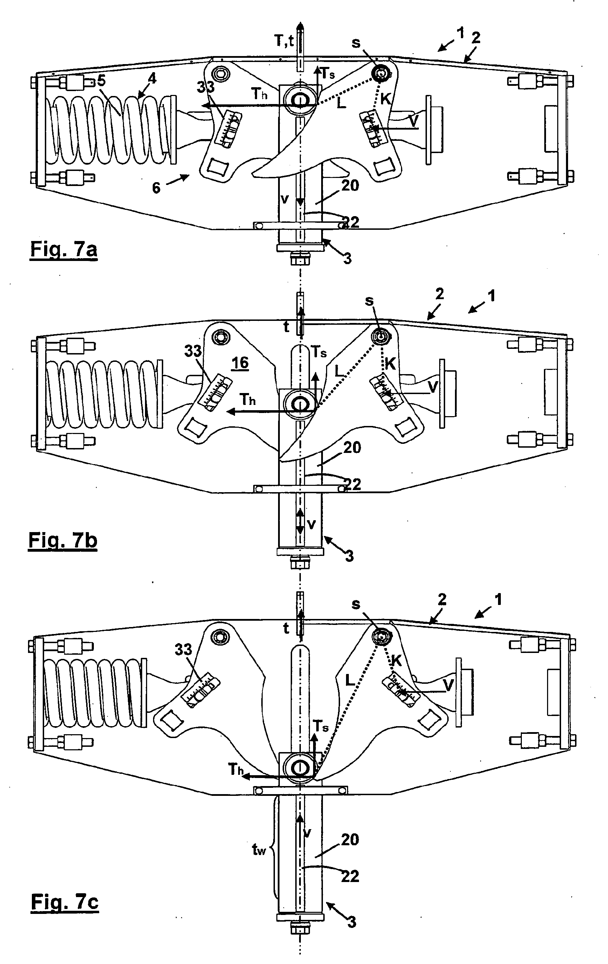

Beabstandet zu der Schwenkachse s, greifen die Federn 14 mit ihrem jeweiligen Lastpunkt 15 unter Ausbildung eines Kraftarmes K an den ihnen zugeordneten Kurvenhebeln 16 an. Die Kurvenhebel 16 sind jeweils mit einer Kurvenseitenfläche 18 versehen, die einen spezifischen geschwungenen Verlauf zur Kompensation von sich ändernden Federkräften über den Trageweg t_{w} aufweisen. Das Lasttrageteil 3 weist Lastrollen 19 auf, die um eine gemeinsame Drehachse d senkrecht zur Federachse f und senkrecht zur Tragekraftrichtung t drehbar angeordnet sind. Das Lasttrageteil 3 liegt über die Lastrollen 19 abrollbar an den Kurvenseitenflächen 18 an. Die Lastrollen 19 liegen jeweils in einem Abrollpunkt 24 auf der ihnen jeweils zugeordneten Kurvenseitenfläche 18 an, wobei der Abrollpunkt 24 in jedem Punkt der Kurvenseitenfläche 18 beabstandet zu der Drehachse d ist. Hierdurch bildet sich ein Lastarm L zwischen dem Abrollpunkt 23 und der Schwenkachse s aus, der über ein Abrollen der Lastrolle 19 über die Kurvenseitenfläche 18 veränderbar ist. Dies ist in Figur 7a bis c dargestellt. Auffällig ist, dass die Kurvenseitenflächen 18, wie an dem vorderen Kurvenhebel 16 in Fig. 1 ersichtlich, über ihren gesamten nichtlinearen, geschwungenen, und steten Verlauf notwendig stets mit einer Richtungskomponenten in Tragekraftrichtung t weisen, um die Tragekraft T in Tragekraftrichtung t für die Last zu erzeugen. Da im Betrieb die Tragekraft T mit der Lastkraft Lₖ im Gleichgewicht stehen soll, wird das Lasttrageteil 3, nachdem die Federung 5 werkseitig auf eine bestimmte Vorspannung eingestellt wurde, blockiert.

Die der in den Abbildungen rechten Feder 14 zugeordneten Kurvenhebel 16 umgreifen seitlich zwei Lasttragelaschen 20, die an der Drehachse d angehängt und parallel nach unten durch die Blende 12 zum Anschluss an ein weiteres Trageelement 21 zum Aufhängen der hier nicht dargestellten Last geführt sind. Die der hier linken Feder 14 zugeordneten Kurvenhebel 16 sind zwischen den beabstandeten Lasttragelaschen 20 geführt angeordnet. Die beiden Federn 14 sind in der in Fig. 1, 2, 3a und 7a-c gezeigten Grundposition auf einer gemeinsamen, waagerechten Federachse f angeordnet. Somit weist der Konstantträger 1 bezüglich einer Spiegelsymmetrieebene, die senkrecht zur hinteren Seitenwand 9 des Gehäuses 8 bzw. senkrecht zu einer sich in Tragekraftrichtung erstreckenden und parallel zu den Federachsen verlaufenden Ebene angeordnet ist, einen spiegelsymmetrischen Kräfteverlauf und eine weitgehend spiegelsymmetrische Anordnung der Bauteile auf.

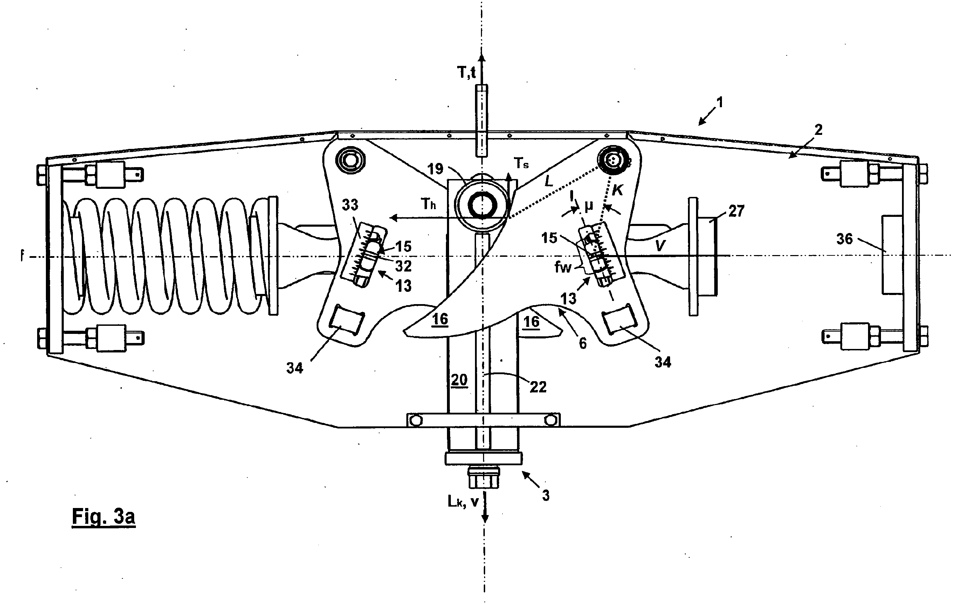

Die Korrekturvorrichtung 13 ist in dem Gehäuse 8 angeordnet. Hierbei ist jeweils als Teil der erfindungsgemäßen Korrekturvorrichtung 13 eine Führung 25 in Form eines Langloches 26, das jeweils in den Kurvenhebeln 16 integriert ist. In dem Langloch 26 ist jeweils ein Lastpunkt 15 der Feder 14 über einen Führungsweg f_{w} verschieblich geführt, wobei der Führungsweg f_{w} dadurch begrenzt wird, dass der Lastpunkt 15 in Richtung der Längsachse 1 endseitig im Langloch 26 anschlägt. Der in der Zeichnung angegebene Führungsweg f_{w} bezieht sich auf eine geometrische Mitte des Lastpunktes 15 in Längsachse 1 des Langloches 26. Das Langloch 26 ist mit seiner Längsachse 1 geneigt zur Tragekraftrichtung t und in einer Wegkomponente in Richtung der Federachse f angeordnet. Hierbei bildet jeweils ein Abstand zwischen dem Lastpunkt 15 und der Schwenkachse s einen Kraftarm K, der durch ein Verschieben des Lastpunktes 15 in der Führung 25 bzw. in dem Langloch 26 über den Führungsweg f_{w} verändert werden kann. Wie anhand der Figuren 3a-c näher erläutert, erfolgt die Korrektur der sich bei einer Änderung der Vorspannung einstellenden Abweichung vom gewünscht konstanten Verlauf der Tragekraft T über den Trageweg t_{w} mittels einer Änderung des Krafthebels K hinsichtlich seiner Länge sowie seiner Richtung relativ zu dem ihm zugeordneten Kurvenhebels. Über die Korrektur könne beispielsweise geänderte Reibungsverluste bei den beweglichen Teilen und insbesondere bei den relativ zueinander abgleitenden oder abrollenden Teilen, erfasst werden.

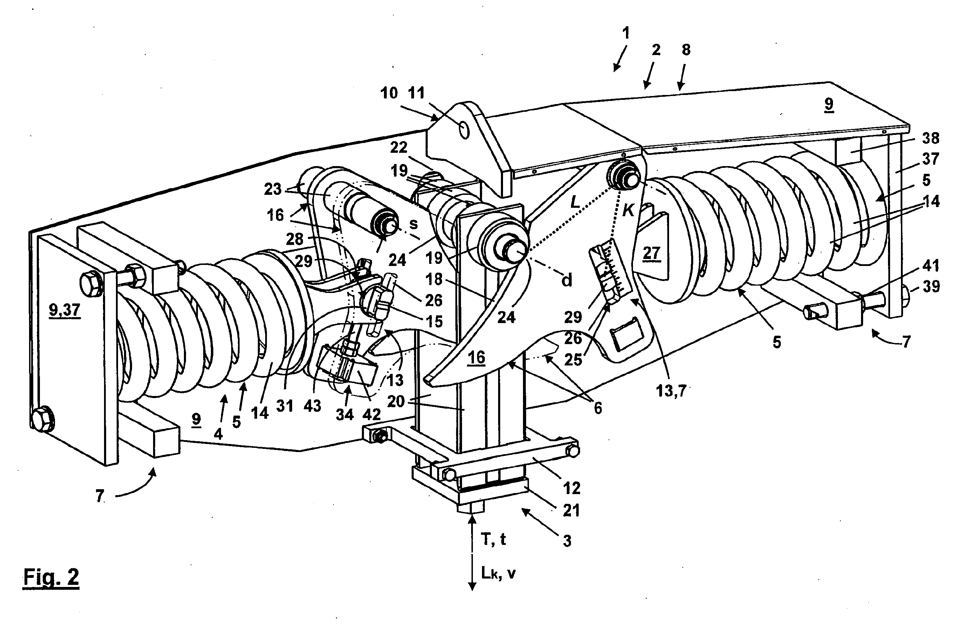

Zur Verdeutlichung der Anordnung des Lastpunktes 15 der Feder 14 in dem Langloch 26 ist in Fig. 2 der vordere linke Kurvenhebel 16 fortgelassen bzw. in Form eines gestrichelten und durchsichtig gezeichneten Phantombild angedeutet. Hierbei stützen sich die Federn 14 lastseitig jeweils gegen ein tellerartiges Lastwiderlager 27, das sich wiederum auf einem Querbolzen 28 verschwenkbar abstützt. Der Querbolzen 28 ist mit beiden als Führungsenden 29 ausgebildeten Enden in den Langlöchern 26 verschieblich gelagert. Die Führungsenden 29 sind jeweils von zwei Seiten her und jeweils unter Ausbildung einer Schulter 30 und zweier paralleler Führungsseitenflächen 31 seitlich abgeflacht. Hierdurch liegt das Führungsende 29 mit den Führungsseitenflächen 31 verdrehsicher und verschieblich an den Innenseitenflächen des ihm zugeordneten Langloches 26 an. Da an dieser Stelle die Federkräfte auf die Kompensationsvorrichtung 6 bzw. auf die zugeordneten Kurvenhebel 16 übertragen werden, bilden die beiden Führungsenden 29 eines Querbolzens 28 den Lastpunkt 15 der zugeordneten Feder 14.

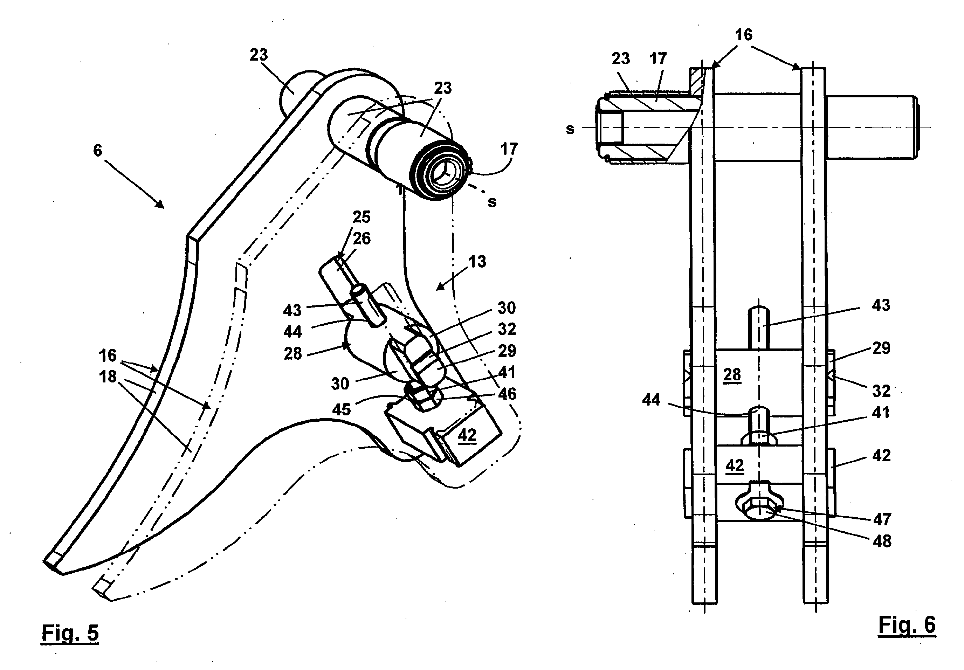

Stirnseitig an dem Führungsende 29 ist eine Markierung 32 in Form einer Kerbe mit V-förmigem Querschnitt vorgesehen, die senkrecht zu den Führungsseitenflächen 31 bzw. senkrecht zur Längsachse 1 verläuft und eine stirnseitige Mitte bezüglich der Längsachse 1 des Langloches 26 anzeigt. Seitlich längs des Langloches 26 ist eine Lastskala 33 zur Anzeige des Führungsweges f_{w} des Führungsendes 29 in dem Lochloch 26 angeordnet, wobei die Lastskala 33 in Kilo-Newton (kN) und in pounds (lps) skaliert ist. Der Querbolzen 28 wird mittels einer weiter unten anhand der Figuren 5 und 6 näher erläuterten Haltevorrichtung 34 in dem Langloch 26 in einer bestimmten Korrekturposition gehalten und über den Führungsweg f_{w} verschoben.

Anhand der Figuren 3a bis 3c wird das der Korrekturvorrichtung 13 zu Grunde liegende Prinzip näher erläutert. In diesen Figuren ist jeweils die rechte Feder fortgelassen. Ferner bleibt die Stellung des Lastpunktes 15 der linken Feder 14 unverändert in der Grundposition, um die Lageveränderung des Lastpunktes 15 der fortgelassenen rechten Feder infolge einer geänderten Voreinstellung der Vorspannung deutlich zu machen. Dies würde übrigens in der Praxis kaum durchgeführt werden, da stets symmetrische Kraftverhältnisse angestrebt werden und an beiden Federn eine gleiche Vorspannung eingestellt würde. Die Kurvenhebel 16 selbst bleiben in den Figuren 3a-c in ihrer Position unverändert, so dass der jeweilige Abstand zwischen der Schwenkachse s und dem Abrollpunkt 24 und damit der jeweilige Lastarm L in allen Kurvenhebeln 16 gleich und unverändert bleibt.

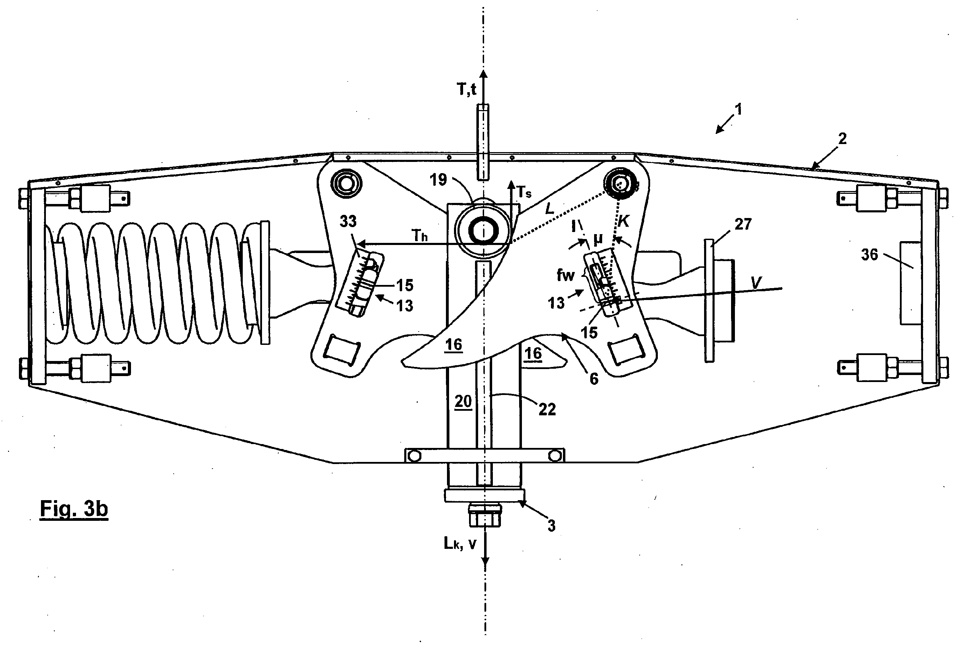

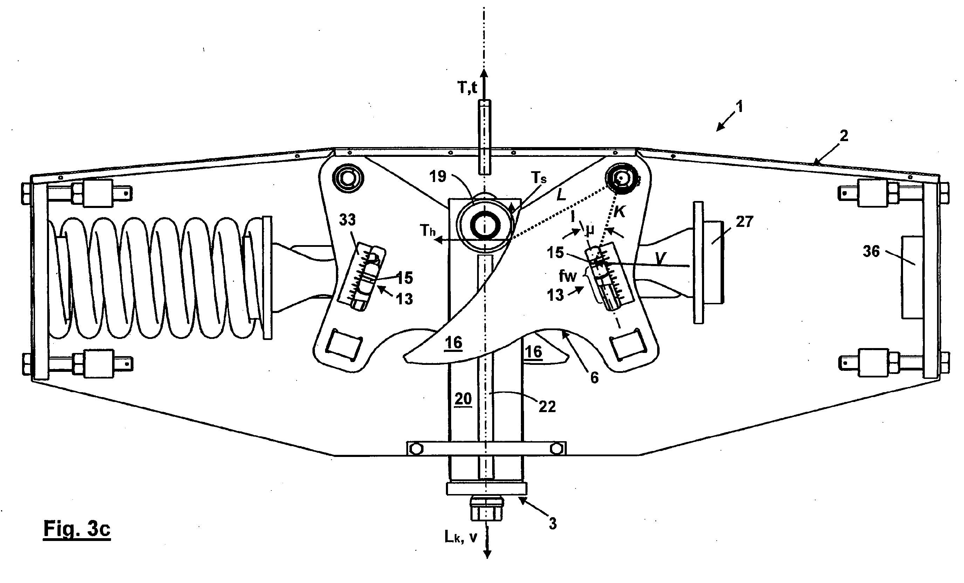

In Figur 3a befinden sich beide Lastpunkte 15 der Federn 14 in der Grundposition, während der in den Figuren rechte Lastpunkt 15 der rechten Feder 14 in Figur 3b auf dem Führungsweg f_{w} nach unten und in Figur 3c auf dem Führungsweg f_{w} nach oben jeweils bis zum Ende des Langloches 26 verschoben ist. Mit dem Verschieben des rechten Lastpunktes 15 nach unten wird ein Abstand zwischen Lastpunkt 15 und einem Befestigungswiderlager 36, in dem die hier fortgelassene Feder befestigungsseitig gelagert ist, verkürzt und damit die Feder entsprechend zusammengedrückt, d.h. weiter vorgespannt. Gleichzeitig wird der Krafthebel K verlängert und in seiner Orientierung verändert. Ähnlich wird bei einem Verschieben des rechten Lastpunktes 15 nach oben ein Abstand zwischen Lastpunkt 15 und einem Befestigungswiderlager 36 vergrößert, somit die Feder wird entsprechend entspannt sowie der Krafthebel unter Änderung seiner Orientierung verkürzt. Somit ist über einer Verschiebung des Lastpunktes 15 in dem Langloch 26 die Vorspannung der Feder einstellbar. Ferner wird mit einem Verschieben des Lastpunktes 15 nach oben oder unten gleichzeitig die Richtung der Federachse f, die in der Grundposition etwa waagerecht verläuft, entsprechend nach oben oder unten geneigt. Somit wird bei einem Verschieben des Lastpunktes 15 nach oben, gleichbedeutend einer Entspannung der Feder, das Verhältnis von Kraftkomponente in Tragekraftrichtung t zu Kraftkomponente senkrecht zur Tragekraftrichtung t vergrößert. Hiermit wird dem Umstand Rechnung getragen, dass eine weniger vorgespannte Feder eine geringere Federkraft aufweist. Ähnlich wird bei einem Verschieben des Lastpunktes 15 nach unten, gleichbedeutend einer weiteren Vorspannung der Feder 14, das Verhältnis von Kraftkomponente in Tragekraftrichtung t zu Kraftkomponente senkrecht zur Tragekraftrichtung t verringert. Hiermit wird dem Umstand Rechnung getragen, dass eine stärker vorgespannte Feder eine größere Federkraft aufweist. Somit wird in beiden Fällen der Kraftarm K in seiner Richtung und seinem Betrag verändert, während der Lastarm L so lange unverändert bleibt, wie das Lastteil unverschoben in der in Figur 3 a-c gezeigten Position verbleibt. Somit erfolgt die Korrektur von Abweichungen der Tragekraft T über den Trageweg t_{w} oder des Lastverhaltens infolge einer geänderten Vorspannfederkraft V mittels einer Korrektur des Krafthebels in seiner Länge und seiner relativen Richtung bezüglich des Kurvenhebels 16)

Am Abrollpunkt 24 sind qualitativ die Kraftkomponenten Tₛ in Tragekraftrichtung t und Tₕ in horizontaler Richtung eingezeichnet. Ferner ist qualitativ die Vorspannfederkraft V eingezeichnet, die sich entsprechend der Verschiebung des Lastpunktes 15 in dem Langloch 26 ändert. Hierbei ändert sich die Kraftkomponente Tₛ proportional mit sich ändernder Vorspannfederkraft V, wobei die Vorspannfederkraft V infolge einer Verschiebung der Feder 14 aus ihrer in der Grundposition horizontalen Lage auch in ihrer Richtung verändert wird. Wegen der herrschenden Kräftesymmetrie und des Einsatzes von vier Kurvenhebeln 16 beträgt die einzelne Kraftkomponente Tₛ auf eine Lastrolle 19 ein Viertel der gesamten Tragekraft T, wenn andere Einflüsse wie veränderte Reibung an beweglichen Teilen nicht berücksichtigt werden.

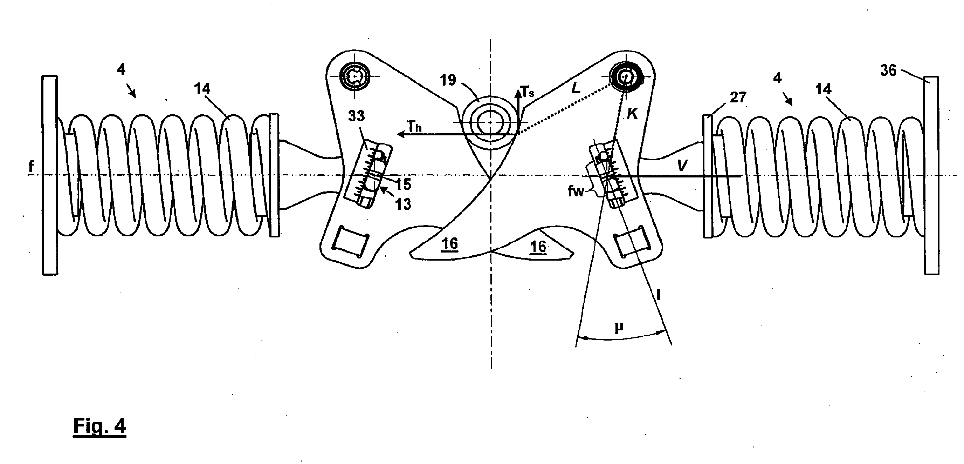

Entscheidend für ein Maß der Änderung des Verhältnisses von Kraftkomponente Tₛ in Tragekraftrichtung t zu Kraftkomponente Tₕ senkrecht zur Tragekraftrichtung t ist unter anderem die Neigung der Längsachse 1 des Langloches 26. Diese Neigung ist in den Figuren 3a bis c sowie in Figur 4 eingezeichnet, wobei in Figur 4 der klareren Darstellung halber lediglich das Federsystem 4 und die Lastrollen 19 in einer Seitenansicht gezeigt sind. Die Neigung wird hier durch einen Korrekturwinkel µ beschrieben, der durch den Kraftarm K und der Längsachse 1 des Langloches 26 eingeschlossen wird. Bei den in diesem Ausführungsbeispiel verwendeten Geometrien und unter der Bedingung, dass die Führung 25 linear sein soll, beträgt der optimale Korrekturwinkel µ etwa 30°. Andere Geometrien können einen anderen optimalen Korrekturwinkel erfordern.

Die Vorspannvorrichtung 7 weist ferner eine Einstellvorrichtung 35 zur Voreinstellung der Vorspannkraft auf. Diese ist im Prinzip ähnlich der in der DE 10 2005 045 736 und der PCT/DE2006/001678 offenbarten Einstellvorrichtung, aber dank der erfindungsgemäßen Korrekturvorrichtung 13 ist die Einstellvorrichtung 35 unaufwendiger aufgebaut. Auch hier ist die Feder 14 befestigungsseitig jeweils in einem Befestigungswiderlager 36 gelagert, das in Richtung der Federachse (f) verschiebbar und feststellbar ist. Hierzu ist die als Spannwand 37 ausgebildete Seitenwand 9 des Gehäuses 8, an dem sich die Feder 14 befestigungsseitig abstützt, in Richtung der Federachse (f) und relativ zu der vorderen bzw. hinteren Seitenwand 9 verschiebbar und in einer bestimmten Vorspannposition fixierbar angeordnet. Die Einstellvorrichtung 35 weist für jede Feder 14 zwei Querstreben 38 mit rechtwinkligem Querschnitt auf, die senkrecht zur Federachse f angeordnet und stirnseitig jeweils in der vorderen und hinteren Seitenwand 9 verankert sind. Von der Spannwand 37 führen zwei diagonal in der Spannwand angeordneten 39 zu den Querstreben 38 und sind jeweils durch eine Durchgangsbohrung 40 mit Innengewinde geführt, in das die Spannschrauben 39 jeweils eingreifen. Mit einer Drehung der Spannschrauben 39 wird somit die Spannwand 37 verschoben und die Vorspannung der Federn 14 geändert. Auf den Spannschrauben 39 ist eine Kontermutter 41 vorgesehen, die zur Konterung in einer bestimmten Vorspannposition gegen die Querstreben 38 geführt wird. Es bleibt die Einstellung der Vorspannung mittels der Spannwand 37 in allen dargestellten Figuren gleich. Bei dem hier gezeigten Ausführungsbeispiel ist vorgesehen, dass die Vorspannung der Federn 14 über die Einstellvorrichtung 35 jeweils fabrikseitig oder werkstattseitig vorgespannt und anschließend in der bestimmten Vorspannvorrichtung fixiert und eventuell versiegelt wird. Hierbei befindet sich der Lastpunkt 15 in der Grundposition, in der der Lastpunkt 15 in der Mitte des Langloches 26 gehalten ist. An einem vorgesehenen Montageort des Konstantträgers 1 kann derselbe über die Korrekturvorrichtung 13 der tatsächlich vorhandenen Last angepasst werden.

Die Haltevorrichtung 3 wird anhand der Figuren 5 und 6, die jeweils ein Paar parallele Kurvenhebel 16, den Querbolzen 28, den Schwenkbolzen 17 nebst Hülsen 23 und die Haltevorrichtung 34 in einer perspektivischen Draufsicht bzw. in einer Unteransicht zeigen, näher erläutert. Hierbei ist der in Figur 5 vordere Kurvenhebel 16 zur klareren Darstellung als Phantombild dargestellt.

Zum Abstützen des Querbolzens 28 ist ein Querblock 42 mit rechtwinkligem Querschnitt parallel zum Querbolzen 28 vorgesehen. Der Querblock 42 ist parallel und auf der Längsachse 1 des Langloches 26 beabstandet sowie endseitig zwischen den Kurvenhebeln 16 und mit denselben über eine Steckverbindung lose bleibend verdrehfest verbunden angeordnet, wobei er den Schwenkhebel 16 endseitig durchgreift und um einen geringen Betrag überragt. Der Querbolzen 28 weist bis auf seine abgeflachten Führungsenden 29 einen kreisrunden Querschnitt auf. Die Führungsenden 29 liegen an Dank der Steckverbindung von Querbolzen 28 und ein Querblock 42 mit zugeordneten Kurvenhebeln 16 sind diese leicht montierbar und demontierbar.

Querbolzen 28 ist über eine mittig im Querblock 28 drehbar gelagerte Spindel 43 mit dem Querblock 42 verbunden und über Drehung der Spindel 43 linear in dem Langloch 26 verschiebbar. Hierzu weist der Querbolzen 28 eine mittige erste Durchgangsöffnung 44 mit einem hier nicht explizit gezeigten Gewinde auf, in welches die Spindel 43 eingreift. Mit Drehung der Spindel 43 kann somit der mit seinen Führungsenden 29 verdrehfest in den Langlöchern 26 gelagerte Querbolzen 28 in Längserstreckung der Langlöcher 26 linear verschoben werden. Der Querblock 42 weist eine zweite Durchgangsöffnung 45 auf, in der die Spindel 43 verdrehbar gelagert ist.

Über eine gekonterte und seitlich an dem Querblock 42 anliegende Schraubenmutter 46, wird die Spindel 43 und damit der Querbolzen 28 mit dem Lastende der Feder 14 an dem Querblock 42 und damit an den Kurvenhebeln 16 abgestützt.

Wie beispielsweise aus den Figuren 1, 5 und 6 ersichtlich, ist der Querblock 42 unterhalb des Querbolzens 28 angeordnet. Die Spindel 43 durchragt mit einem Einstellende 47 den Querblock 42, wobei das Einstellende 47 stirnseitig mit einem Schraubenkopf 48 versehen ist, der leicht von unten her zugänglich ist. Somit kann die Änderung der Vorspannung der Federung 4 mittels einer Drehung des Schraubenkopf 48 bzw. der Spindel 43 insbesondere dann vorgenommen werden, wenn, wie üblich und in diesem Ausführungsbeispiel vorgesehen, kein Gehäuseboden vorgesehen ist.

Zu seiner sicheren verschieblichen Lagerung durchragt das Führungsende 29 das Langloch 26 und überragt die Seitenwand 9, in die das Langloch 26 eingelassen ist, um einen geringen Betrag.

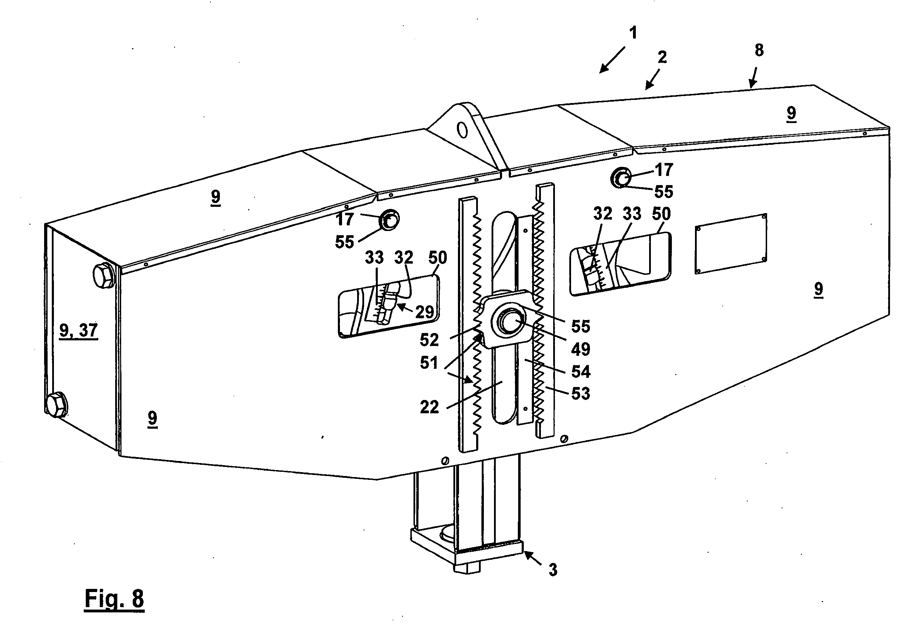

Einem Teilschnitt durch den Schwenkbolzen 17 aus Figur 6 ist deutlich entnehmbar, dass die Hülsen 23 auf den Schwenkbolzen 17 aufgeschoben sind und stirnseitig an den Kurvenhebeln 16 zur Beabstandung derselben von einander und zum Gehäuse 8 anliegen. Die Drehachse d ist als Lastrollenachse 49 ausgebildet, auf der alle vier Lastrollen 19 gemeinsam angeordnet sind, die wiederum durch Hülsen 23 und durch die angehängten Tragelaschen 20 voneinander und von den Gehäusewänden 9 beabstandet sind. Ferner ist die Lastrollenachse 49 mit ihren beiden Enden jeweils in dem senkrechten Führungsschlitz 22 der vorderen und der hinteren Seitenwand 9 des Gehäuses 8 angeordnet, wobei der Führungsschlitz 22 lediglich in Figur 8 auch in der vorderen Seitenwand 9 des Gehäuses 8 gezeigt ist.

In den Figuren 7a bis 7c wird in drei Verschiebepositionen das Verschieben des Lasttrageteiles 3 über den Trageweg t_{w} gezeigt. In der Figur 7a ist das Lasttrageteil 3 in einer oberen Verschiebeposition gezeigt, in der es maximal in das Gehäuse 8 eingezogen ist. In der Figur 7b ist das Lasttrageteil 3 in einer mittleren Verschiebeposition und in Figur 7 c in einer unteren Verschiebeposition gezeigt, in der das Lasttrageteil 3 maximal aus dem Gehäuse 8 herausgezogen ist.

Durch die Anlenkung der Kurvenhebel 16 an das Gehäuse 8 werden die Federn 14 leicht verschwenkt. Die Geometrien des Konstantträgers 1 sind hierbei so eingestellt, dass die Federn 14 der mittlere Verschiebeposition nahezu senkrecht zur Verschieberichtung v verlaufen. Ferner bleibt die über die Korrekturvorrichtung 13 eingestellte Vorspannfederkraft V konstant.

Über die Kurvenhebel 16 wird in jeder Verschiebeposition des Lasttrageteiles 3 über den Trageweg t_{w} die Tragekraft T mit einer hier senkrechten Kraftkomponente Tₛ in Tragkraftrichtung, und einer hier horizontalen Kraftkomponente Tₕ in Richtung der Federachse f und senkrecht zur Kraftkomponente Tₛ auf die Lastrollen 19 ausgeübt, wobei sich die horizontalen Kraftkomponenten Tₕ dank des symmetrischen Aufbaues bzw. dank der symmetrischen Anordnung der Federn 14 aufheben und zusammen mit der hier nicht dargestellten, an dem Trageelement 21 des Lasttrageteils 3 angeordneten Last für den Zusammenhalt der einzelnen beweglichen Teile des Konstantträgers 1 sorgen. Die Kurvenseitenflächen 13 sind so profiliert, dass die Kraftkomponente Tₛ von der unteren Verschiebeposition zu der oberen Verschiebeposition hin kontinuierlich und nichtlinear in einem errechneten Maße so zunimmt, dass die sich ändernden Federkräfte der Federn 14 beim Zusammendrücken bzw. Auseinandergehen derselben und die durch das oben genannte Verschwenken der Federn 14 mit Verschwenken der Kurvenhebel 16 veränderte Richtung der Federachse f vollständig kompensiert wird und eine über den Trageweg t_{w} konstante Tragekraft T auf die Last wirkt. Die Tragekraft T ist qualitativ etwa die Summe aller senkrechten Kraftkomponenten Tₛ an den Lastrollen 19. Da hier vier Schwenkhebel 16 vorgesehen sind, die auf zugeordnete Lastrollen 19 wirken, beträgt die Tragekraft T ein Vierfaches der Kraftkomponenten Tₛ. In den Figuren 7a bis 7c sind zur weiteren Veranschaulichung der Änderung der Kräfteverhältnisse der Kraftarm K und der Lastarm L eingezeichnet. Hierbei bleiben der Kraftarm K und die Vorspannfederkraft V konstant, da über die Korrekturvorrichtung 13 keine Änderungen durchgeführt wurden. Der Lastarm L vergrößert sich mit Verschieben des Lastteiles 3 nach unten. Hierzu im Übrigen wird auf die PCT/DE2006/001678 verwiesen.

Figur 8 zeigt den Konstantträger 1 wie in Figur 1 in einer perspektivische Seitenansicht, wobei hier jedoch die fehlenden Seitenwände 9 des Gehäuses 8 ergänzt sind. In der in Figur 8 vorderen Seitenwand 9 sind zwei Gehäusefenster 50 zur Durchsicht auf das Langloch 26 und die Lastskala 33 in Höhe derselben eingearbeitet.

Wie oben erläutert, wird mit Einstellung der Federung 5 in Arbeitslage des Konstantträgers 1 eine permanente Federkraft des Federsystemes 4 auf die Last ausgeübt. Mit Fehlen der Last, wie zum Beispiel bei Transport oder Lagerung des Konstantträgers, würde das Lasttrageteil 3 mit der zum Tragen der Rohrleitung bestimmten Tragekraft T in Tragekraftrichtung t gegen das Gehäuse 8 beschleunigt. Zur Blockierung des Lasttrageteiles 3 bei einem unbelasteten Konstantträger 1 ist daher eine in Figur 8 dargestellte Transportsicherung 51 vorgesehen. Diese weist eine Zahnscheibe 52 auf, die auf der sich durch den Führungsschlitz 22 erstreckenden Drehachse d oder Lasttrageachse 49 aufsetzbar ist und die, zwischen zwei an dem Gehäuse 8 vorgesehene als Blockierleisten ausgebildete Zahnschienen 53 gesetzt, in dieselben eingreift und somit die Bewegung des Lasttrageteiles 3 auf dem Trageweg t_{w} blockiert. Mit Anhängung der Last an dem Trageelement 21 kann die Zahnscheibe 52 entfernt werden.

Parallel zu und seitlich an dem Führungsschlitz 22 ist eine Wegskala 54 zur Anzeige des Trageweges t_{w} vorgesehen, die in Wegeinheiten cm und mm sowie in inches skaliert ist.

Die Lasttrageachse 49 und die Schwenkbolzenerstrecken sich jeweils endseitig 17 durch die vordere und hintere Seitenwand 9 und sind über Sicherungsringe 55 gegen ein axiales Verschieben oder Herausfallen gesichert. Die Seitenwände 9 des Gehäuses 8, die Anschlusslasche 10 und die Blende 12 sind, wie hier nicht explizit gezeigt, miteinander verschraubt, während die im Gehäuse 8 angeordneten Bauteile bezüglich der Kompensationsvorrichtung 6, der Korrekturvorrichtung 13 sowie der Lastrollen 19 und der Lasttragelaschen 20 lose bleibend angeordnet sind, so dass der Konstantträger unaufwendig montiert und demontiert werden kann.

### Bezugszeichenliste

- 1: Konstantträger
- 2: Befestigungsteil
- 3: Lasttrageteil
- 4: Federsystem
- 5: Federung
- 6: Kompensationsvorrichtung
- 7: Vorspannvorrichtung
- 8: Gehäuse
- 9: Seitenwand
- 10: Anschlusslasche
- 11: Befestigungsöffnung
- 12: Blende
- 13: Korrekturvorrichtung
- 14: Feder
- 15: Lastpunkt
- 16: Kurvenhebel
- 17: Schwenkbolzen
- 18: Kurvenseitenfläche
- 19: Lastrollen
- 20: Lasttragelasche
- 21: Trageelement
- 22: Führungsschlitz
- 23: Hülse
- 24: Abrollpunkt
- 25: Führung
- 26: Langloch
- 27: Lastwiderlager

- 28: Querbolzen
- 29: Führungsende
- 30: Schulter
- 31: Führungsseitenfläche
- 32: Markierung
- 33: Lastskala
- 34: Haltevorrichtung
- 35: Einstellvorrichtung
- 36: Befestigungswiderlager
- 37: Spannwand
- 38: Querstrebe
- 39: Spannschraube
- 40: Durchgangsbohrung
- 41: Kontermutter
- 42: Querblock
- 43: Spindel
- 44: erste Durchgangsöffnung
- 45: zweite Durchgangsöffnung
- 46: Schraubenmutter
- 47: Einstellende
- 48: Schraubenkopf
- 49: Lastrollenachse
- 50: Gehäusefenster
- 51: Transportsicherung
- 52: Zahnscheibe
- 53: Zahnschiene
- 54: Wegskala
- 55: Sicherungsringe
- d: Drehachse
- f: Federachse
- f_{w}: Führungsweg
- K: Kraftarm
- l: Längsachse
- Lk: Lastkraft
- L: Lastarm
- s: Schwenkachse

- t: Tragekraftrichtung
- T: Tragekraft
- Tₛ: senkrechte Tragekraftkomponente
- Tₕ: horizontale Tragekraftkomponente
- t_{w}: Trageweg
- v: Verschieberichtung
- V: Vorspannfederkraft
- p: Korrekturwinkel

## Patentansprüche

1. Konstantträger für sich verschiebende Lasten, insbesondere für Rohrleitungen und dergleichen, mit einem Befestigungsteil (2), einem Lasttrageteil (3) und einem zwischen Befestigungsteil (2) und Lasttrageteil (3) angeordneten Federsystem (4) zur Erzeugung einer über einen Trageweg des Lasttrageteiles gegenüber dem Befestigungsteil konstant bleibenden Tragekraft (T), wobei das Federsystem eine die Last aufnehmende Federung, eine Kompensationsvorrichtung zur Kompensation von sich ändernden Federkräften der Federung über den Trageweg und eine Vorspannvorrichtung zur Einstellung einer Vorspannkraft der Federung aufweist, **dadurch gekennzeichnet, dass** eine Korrekturvorrichtung (13) zur Korrektur von Abweichungen der Tragekraft (T) über den Trageweg (t_{w}) infolge einer geänderten Vorspannfederkraft (V) vorgesehen ist, wobei die Korrekturvorrichtung mit der Vorspannvorrichtung so gekoppelt ist, dass die Korrektur automatisch mit der Änderung der Vorspannkraft erfolgt.

2. Konstantträger nach Anspruch 1, **dadurch gekennzeichnet, dass** die Kompensationsvorrichtung (6) ein mit dem Lasttrageteil (3) gekoppeltes Kurventeil aufweist, dass die Federung (5) mindestens eine Feder (14), insbesondere eine Druckfeder, umfasst, die sich mit einer Kraftseite in einem Kraftpunkt an dem Befestigungsteil (2) abstützt und zur Kraftübertragung von der Federung (5) auf das Lasttrageteil (3) mit einer Lastseite in einem Lastpunkt (15) an dem Kurventeil angreift, und dass der Lastpunkt (15) und/oder der Kraftpunkt zur Korrektur von Abweichungen der Tragekraft (T) über den Trageweg (t_{w}) infolge einer geänderten Vorspannfederkraft (V) relativ zum Kurventeil und über einen Einstellweg mit einer Wegkomponenten senkrecht zur Federachse (f) der jeweiligen Feder (14) und in einer Ebene mit oder parallel zu der Tragekraft (T) lageveränderbar angeordnet ist sowie in einer bestimmter Korrekturposition fixierbar ist.

3. Konstantträger nach Anspruch 2, **dadurch gekennzeichnet, dass** die Korrekturvorrichtung (13) eine Führung (25) für den Lastpunkt (15) und/oder den Kraftpunkt einer oder mehrer Federn (14) aufweist.

4. Konstantträger nach Anspruch 3, **dadurch gekennzeichnet, dass** der Lastpunkt (15) zu seiner Einstellung in der Führung (25) auf einem Führungsweg (f_{w}) mit einer Wegkomponente in Längsachse (1) der Feder (14) sowie mit einer Wegkomponente senkrecht zu der Längsachse (1) der Feder (14) und in einer Ebene mit der Tragekraft (T) verschiebbar und in einer gewünschten Einstellposition in der Führung (25) bezüglich des Kurventeiles kraft- und/oder formschlüssig fixierbar ist.

5. Konstantträger nach einem der Ansprüche 2 bis 4, **dadurch gekennzeichnet, dass** die Federung (5) zwei als Druckfedern ausgebildete Federn (14) aufweist, dass die Druckfedern symmetrisch zur Tragekraft (T) einander gegenüberliegend angeordnet sind und dass die Druckfedern jeweils mit ihrer Lastseite in einem Lastpunkt (15) an dem Kurventeil oder an einem ihnen jeweils zugeordneten Kurventeil angreifen.

6. Konstantträger nach Anspruch 5, **dadurch gekennzeichnet, dass** die Federn (14) in einer Grundposition auf einer gemeinsamen Federachse (f) oder zueinander geneigt angeordnet sind.

7. Konstantträger nach einem der Ansprüche 2 bis 6, **dadurch gekennzeichnet, dass** das Kurventeil mindestens einen als Kurvenhebel (16) ausgebildeten und an dem Befestigungsteil (2) in einem Schwenkgelenk gelagerten Hebel mit zwei einander gegenüberliegenden Seitenflächen in seiner Längserstreckung, einer erste Seitenfläche und eine zweite Seitenfläche, aufweist, dass die Feder (14) mit ihrer Lastseite in einem Bereich der ihr zugewandten ersten Seitenfläche oder an der ihr zugewandten ersten Seitenfläche verschwenkbar angelagert ist oder sich an dieser abstützt und dass die zweite Seitenfläche als Kurvenseitenfläche (18) ausgebildet ist, an der das Lasttrageteil (3) verschieblich oder abrollbar anliegt.

8. Konstantträger nach Anspruch 7, **dadurch gekennzeichnet, dass** das Lasttrageteil (3) eine Lastrolle (19) mit einer Drehachse(d) senkrecht zur Federachse (f) und senkrecht zur Tragekraftrichtung (t) aufweist und dass die Kurvenseitefläche (18) in einer Ebene senkrecht zur Drehachse (d) abrollbar an der Lastrolle anliegt.

9. Konstantträger nach Anspruch 7 oder 8, **dadurch gekennzeichnet, dass** die Kurvenseitenfläche (18) an dem Lasttrageteil (3) mit einem sich mit dem Verfahren des Lasttrageteiles (3) über den Trageweg (w) verschiebenden Punkt oder Bereich anliegt, der mit einem sich über den Trageweg (t_{w}) ändernden Betrag in Richtung der Tragekraft (T) weist.

10. Konstantträger nach einem der Ansprüche 2 bis 9, **dadurch gekennzeichnet, dass** das Kurventeil flächig mit einer größeren Seitenfläche ausgebildet ist, dass das Kurventeil in einem Schwenklager um eine Schwenkachse (s) senkrecht zu seiner größeren Seitenfläche sowie senkrecht zur Längsachse (1) der Feder (14) und zum Trageweg (t_{w}) an dem Befestigungsteil (2) des Konstantträgers (1) angelagert ist und dass die Führung (25) beabstandet zum Schwenklager in dem Kurventeil integriert ist.

11. Konstantträger nach Anspruch 10, **dadurch gekennzeichnet, dass** die Führung (25) ein Langloch (26) oder einen Schlitz zur Aufnahme und Führung des Lastpunktes (15) aufweist.

12. Konstantträger nach Anspruch 11, **dadurch gekennzeichnet, dass** das Langloch (26) und der Kraftarm einen Korrekturwinkel (µ) größer 0° einschließen.

13. Konstantträger nach einem der Ansprüche 3 bis 12, **dadurch gekennzeichnet, dass** sich der Lastpunkt (15) in der Führung (25) mittels einer Haltevorrichtung (34) gegen das Kurventeil abstützt.

14. Konstantträger nach einem der Ansprüche 11 bis 13, **dadurch gekennzeichnet, dass** für jede Feder (14) zwei Kurvenhebel (16) mit jeweils einem Langloch (26) zur Führung eines Lastpunktes (15) der zugeordneten Feder (14) vorgesehen sind, wobei die Kurvenhebel parallel beabstandet zueinander und zur Tragekraft (T) fluchtend sowie etwa senkrecht zur Federachse (f) und auf einem gemeinsamen Schwenkbolzen (17) verschwenkbar am Befestigungsteil (2) angeordnet sind.

15. Konstantträger nach Anspruch 14, **dadurch gekennzeichnet, dass** sich die Feder (14) mittig auf ein erstes Querelement in Form eines Querbolzen (28) abstützt, der jeweils mit einem Führungsende (29) in einer der Führungen (25) in den Kurvenhebeln (16) verschiebbar gelagert ist.

## Claims

1. Constant bearer for loads which are displaced, in particular for pipelines and the like, having a fastening part (2), a load-bearing part (3) and a spring system (4) which is arranged between the fastening part (2) and the load-bearing part (3) for generating a carrying force (T) which remains constant over a carrying travel of the load-bearing part with respect to the fastening part, where the spring system has a suspension system for absorbing the load, a compensation device for compensating for changing spring forces of the suspension system over the carrying travel, and a prestressing device for setting a prestressing force of the suspension system, **characterised in that** a correction device (13) is provided to correct deviations in the carrying force (T) over the carrying travel (t_{w}) resulting from a changed prestressing spring force (V), where the correction device is coupled to the prestressing device in such a way that correction is performed automatically when the prestressing force changes.

2. Constant bearer according to Claim 1, **characterised in that** the compensation device (6) displays a cam part coupled to the load-bearing part (3), **in that** the suspension system (5) encompasses at least one spring (14), particularly a compression spring, that has a force side supported on a force point on the fastening part (2), and a load side acting on a load point (15) on the cam part to transmit force from the suspension system (5) to the load-bearing part (3), and **in that**, to correct deviations in the carrying force (T) over the carrying travel (t_{w}) resulting from a changed prestressing spring force (V), the load point (15) and/or the force point are designed to be movable relative to the cam part and over an adjusting travel with a directional component perpendicular to the spring axis (f) of the respective spring (14) and in a plane corresponding or parallel to the carrying force (T), and to be fixable in a particular correction position.

3. Constant bearer according to Claim 2, **characterised in that** the correction device (13) displays a guide (25) for the load point (15) and/or the force point of one or more springs (14).

4. Constant bearer according to Claim 3, **characterised in that**, for the purpose of adjustment in the guide (25), the load point (15) is displaceable on a guide travel (f_{w}) with a directional component in the longitudinal axis (1) of the spring (14) and with a directional component perpendicular to the longitudinal axis (1) of the spring (14) and in the same plane as the carrying force (T), and can be fixed in non-positive and/or positive fashion in a desired setting position in the guide (25) relative to the cam part.

5. Constant bearer according to one of Claims 2 to 4, **characterised in that** the suspension system (5) displays two springs (14) designed as compression springs, **in that** the compression springs are arranged opposite each other, symmetrically to the carrying force (T), and **in that** the load side of the compression springs in each case acts on a load point (15) on the cam part or on a cam part respectively assigned to them.

6. Constant bearer according to Claim 5, **characterised in that**, in a starting position, the springs (14) are located on a common spring axis (f) or inclined relative to each other.

7. Constant bearer according to one of Claims 2 to 6, **characterised in that** the cam part displays at least one lever, designed as a cam lever (16) and mounted in a swivelling link on the fastening part (2), with two side faces lying opposite each other in its longitudinal extension, a first side face and a second side face, **in that** the load side of the spring (14) is mounted in swivelling fashion in an area of the first side face facing towards it, or on the first side face facing towards it, or is supported on it, and **in that** the second side face is designed as a cam side face (18), on which the load-bearing part (3) rests in sliding or rolling fashion.

8. Constant bearer according to Claim 7, **characterised in that** the load-bearing part (3) displays a load roller (19) with an axis of rotation (d) perpendicular to the spring axis (f) and perpendicular to the carrying force direction (t), and **in that** the cam side face (18) rests on the load roller in rolling fashion in a plane perpendicular to the axis of rotation (d).

9. Constant bearer according to Claim 7 or 8, **characterised in that** a point or area of the cam side face (18) rests on the load-bearing part (3), said point or area moving as the load-bearing part (3) moves over the carrying travel (t_{w}) and pointing in the direction of the carrying force (T) with a magnitude that changes over the carrying travel (t_{w}).

10. Constant bearer according to one of Claims 2 to 9, **characterised in that** the cam part is designed in flat form with a larger side face, **in that** the cam part is mounted on the fastening part (2) of the constant bearer (1) in a swivelling bearing permitting swivelling movement about a swivelling axis (s) perpendicular to its larger side face, as well as perpendicular to the longitudinal axis (1) of the spring (14) and to the carrying travel (t_{w}), and **in that** the guide (25) is integrated in the cam part at a distance from the swivelling bearing.

11. Constant bearer according to Claim 10, **characterised in that** the guide (25) displays a slot (26) or slit for accommodating and guiding the load point (15).

12. Constant bearer according to Claim 11, **characterised in that** the slot (26) and the power arm include a correction angle (µ) greater than 0°.

13. Constant bearer according to one of Claims 3 to 12, **characterised in that** the load point (15) is supported on the cam part in the guide (25) by means of a holding device (34).

14. Constant bearer according to one of Claims 12 to 13, **characterised in that** two cam levers (16), each with a slot (26) for guiding a load point (15) of the associated spring (14), are provided for each spring (14), where the cam levers are located a distance apart on the fastening part (2), parallel to each other and in alignment with the carrying force (T), as well as perpendicularly to the spring axis (f) and in swivelling fashion on a common swivel pin (17).

15. Constant bearer according to Claim 14, **characterised in that** the spring (14) is supported in the middle of a first transverse element in the form of a transverse bolt (28), a guide end (29) of which is in each case mounted in sliding fashion in one of the guides (25) in the cam levers (16).

## Revendications

1. Suspension à effort constant pour des charges mobiles, en particulier destinée aux conduites et comprenant une pièce de fixation (2), une pièce porte-charge (3) et un système de ressorts (4) disposé entre la pièce de fixation (2) et la pièce porte-charge (3) et destiné à la production d'une force portante (T) qui reste constante par rapport à la pièce de fixation sur la voie porteuse, le système de ressorts comportant une suspension à ressorts recevant la charge, un dispositif de compensation pour la compensation des élasticités changeantes de la suspension à ressorts sur la voie porteuse et un dispositif de prétension pour le réglage d'une force de prétension de la suspension à ressorts, la suspension à effort étant **caractérisée en ce que**, pour la correction des déviations de la force portante (T) sur la voie porteuse (t_{w}) provoquées par un changement de la force de prétension de ressort (V), il est prévu un dispositif de correction (13), ledit dispositif de correction étant couplé au dispositif de prétension de sorte que la correction est fait automatiquement avec le changement de la force de prétension.

2. Suspension à effort constant selon la revendication 1, **caractérisée en ce que** le dispositif de compensation (6) comporte une pièce courbée qui est couplée à la pièce porte-charge (3), **en ce que** la suspension à effort (5) comporte au moins un ressort (14), en particulier un ressort de pression, qui est supporté sur la pièce de fixation (2) par un côté de force et dans un point de force, et qui engage, pour la transmission de force de la suspension à effort (5) à la pièce porte-charge (3), sur la pièce courbée par un côté de force et dans un point de force (15), et **en ce que** le point de charge (15) et/ou le point de force, pour la correction des déviations de la force portante (T) sur la voie porteuse (t_{w}) provoquées à cause d'un changement de la force de prétension de ressort (V), est disposé de manière variable en position et fixable en un certain position de correction par rapport à la pièce courbée et sur une voie de réglage avec une composante de voie verticalement à l'axe de ressort (f) du ressort respective (14) et dans un plan avec ou parallèle à la force portante (T).

3. Suspension à effort constant selon la revendication 2, **caractérisée en ce que** le dispositif de correction (13) comporte un guidage (25) pour le point de charge (15) et/ou le point de force d'un ou plusieurs ressorts (14).

4. Suspension à effort constant selon la revendication 3, **caractérisée en ce que** le point de charge (15), pour son réglage dans le guidage (25) sur une voie de guidage (f_{w}) avec une composante de voie en l'axe longitudinal (1) du ressort (14) et avec une composante de voie perpendiculaire à l'axe longitudinal (1) du ressort (14) et dans un plan avec la force portante (T), peut être déplacé et fixé par adhérence et/or de manière positive.

5. Suspension à effort constant selon l'une des revendications 2 à 4, **caractérisée en ce que** la suspension à ressort (5) comporte deux ressorts (14) en forme de ressorts de pression, **en ce que** les ressorts de pression sont disposés vis à vis l'un à l'autre et de manière symétrique par rapport à la force portante (T) et **en ce que** les ressorts engage chacun sur une pièce courbée ou sur une pièce courbée respectivement associée auxdits ressorts, par son côté de charge et dans un point de charge (15).

6. Suspension à effort constant selon la revendication 3, **caractérisée en ce que** les ressorts (14) dans une position de base sont disposés sur un axe de ressort (f) commun ou de manière inclinée l'un vers l'autre.

7. Suspension à effort constant selon l'une des revendications 2 à 6, **caractérisée en ce que** la pièce courbée comporte au moins un levier en forme d'un levier à came (16) logé dans un joint de pivotement et comportant deux faces latérales opposées en son extension longitudinale, une première face latérale et une deuxième face latérale, **en ce que** le ressort (14), par son côté de charge, est logé sur une région de la première face latérale tournée audit ressort ou est logé de manière pivotante sur la première face latérale tournée audit ressort ou y prend support, et que la deuxième face latérale est formée comme une face latérale courbée (18) sur laquelle est portée la pièce porte-charge (3) de manière déplaçable ou roulante.

8. Suspension à effort constant selon la revendication 7, **caractérisée en ce que** la pièce porte-charge (3) comporte un galet porte-charge (19) avec un axe de rotation (d) perpendiculaire à l'axe de ressort (f) et perpendiculaire au sens de force portante (t) et **en ce que** la face latérale courbée (18) est portée de manière roulante sur le galet porte-charge dans un plan perpendiculaire à l'axe de rotation (d).

9. Suspension à effort constant selon la revendication 7 ou 8, **caractérisée en ce que** la face latérale courbée (18) est portée sur la pièce porte-charge (3) par un point ou une région que se déplace sur la voie portante (w) avec le déplacement de la partie porte-charge (3), ledit point ou ladite région montrant en la direction de la force portante (T), avec un montant qui se change sur la voie porteuse (t_{w}).

10. Suspension à effort constant selon l'une des revendications 2 à 9, **caractérisée en ce que** la pièce courbée est formée de manière bidimensionnelle avec une face latérale plus grande, **en ce que** la pièce courbée est logée sur la pièce de fixation (2) dans un logement de pivotement et autour d'un axe (s) perpendiculaire à l'axe longitudinal (1) du ressort (14) et à la voie porteuse (t_{w}) et **en ce que** la guidance (25) est intégrée dans la pièce courbée de manière écartée du logement de pivotement.

11. Suspension à effort constant selon la revendication 10, **caractérisée en ce que** la guidance (25) comporte un trou oblong (26) ou une fente destinée au logement et à la guidance du point de charge (15).

12. Suspension à effort constant selon la revendication 11, **caractérisée en ce que** le trou oblong (26) et le bras de la puissance inclurent un angle de correction (µ) supérieur à 0°.

13. Suspension à effort constant selon l'une des revendications 3 à 12, **caractérisée en ce que** le point de charge (15) dans la guidance (25) prend support par rapport à la pièce courbée par le moyen d'un dispositif de retenue (34).

14. Suspension à effort constant selon l'une des revendications 11 à 13, **caractérisée en ce que** pour chaque ressort (14) il sont prévus deux leviers courbés (16) chacun avec un trou oblong (26) pour guider un point de charge (15) du ressort (14) associé, lesdits leviers courbés étant disposés sur la pièce de fixation (2) de manière écartée et parallèle l'un part rapport à l'autre et alignée avec la force portante (T) et sensiblement verticalement par rapport à l'axe de ressort (f) et de manière pivotante sur un axe commun de pivotement (17).

15. Suspension à effort constant selon la revendication 14, **caractérisée en ce que** le ressort (14) est supporté centralement sur un premier élément transversal en forme d'un boulon transversal (28) qui est logé par une extrémité de guidance (29) dans une des guidances (25) dans les leviers courbés (16) de manière déplaçable.
